# EUROPEAN PATENT APPLICATION

(11) **EP 4 831 132 A1**
(43) Date of publication of application: **28.10.2026**
(21) Application number: 26172437.1
(22) Date of filing: 15.04.2026
(51) Int. Cl.: C02F 1/24, B01D 19/00, B03D 1/02, B03D 1/14, C02F 101/36, C02F 103/00

(54) **SYSTEM AND METHOD FOR REMOVING PFAS FROM WATER**

(30) Priority: 25.04.2025 SE 2550394
(71) Applicant: ECOMB Ocean Recycle AB, 151 02 Södertälje (SE)
(72) Inventor: HAGSTRÖM, Ulf, 611 92 Nyköping (SE); AMUNDIN, Mats, 618 92 Kolmården (SE)
(74) Representative: Kransell & Wennborg KB

(57) **Abstract**

The present disclosure relates to a system (10) for removing PFAS from water. The system comprises a floating device (1) floating on a body of water (11); a container (2) arranged beneath, and fastened to, the floating device (1), the container having a water inlet (3) arranged in an upper part (2a) of the container and a water outlet (4) arranged in a lower part (2b) of the container; a bubble releasing arrangement (5) arranged in the lower part of the container, above the water outlet, and arranged for releasing bubbles (6) of a gas below a top water surface (13a) in the container; and a surface fluid removing arrangement (7) arranged for continuously removing surface fluid (8) at the water surface in the container.

## Description

### TECHNICAL FIELD

The present disclosure relates to a system for removing Per- and Polyfluoroalkyl Substances (PFAS) from water.

### BACKGROUND

PFAS are a group of synthetic organofluorine chemical compounds that have multiple fluorine atoms attached to an alkyl chain. Many PFAS are health and environmental concerns because they are persistent organic pollutants with half-lives of over eight years due to a strong carbon-fluorine bond. PFAS have been linked to cancer and hormone imbalances in humans and there is a need to remove PFAS from the environment e.g. from drinking water.

### SUMMARY

It is an objective of the present invention to provide a way of removing PFAS from water taken from a body of water, such as a lake, e.g. before forwarding the water to an irrigation system or water treatment plant.

According to an aspect of the present invention, there is provided a system for removing PFAS from water. The system comprises a floating device floating on a body of water. The system also comprises a container arranged beneath, and fastened to, the floating device, typically suspended in the body of water above a bottom of the body of water. The container has a water inlet arranged in an upper part of the container and a water outlet arranged in a lower part of the container. The system also comprises a bubble releasing arrangement arranged in the lower part of the container, above the water outlet. The bubble releasing arrangement may be arranged for releasing bubbles of a gas below a top water surface in the container. The system also comprises a surface fluid removing arrangement arranged for continuously removing surface fluid, e.g. including any foam and/or foamate, at the water surface in the container. The surface fluid removing arrangement may comprise a connection to a PFAS removing arrangement for guiding the removed surface fluid via said connection towards the PFAS removing arrangement. The system may also comprise inlet piping for guiding water from the body of water into the container via the water inlet. The system may also comprise outlet piping for guiding water in the container, below the bubble releasing arrangement, away from the container.
In some embodiments, the bubble releasing arrangement comprises a plurality of bubble diffusers, each diffuser being formed by a tubing, e.g. a flexible tubing, having perforations for releasing bubbles therefrom. In some embodiments, the bubble releasing arrangement comprises a manifold, e.g. of a rigid material, which manifold is connected to each of the diffusers and arranged for distributing the gas thereto. In some embodiments, the bubble releasing arrangement comprises a gas tube connecting the manifold to a gas source for providing the gas to the manifold. Additionally or alternatively, in some embodiments, the bubble releasing arrangement comprises a rigid frame to which all of the diffusers are fastened and held parallel to each other in a horizontal plane within the container. In some embodiments, the manifold is a rigid elongated tube. Additionally or alternatively, in some embodiments, each of the bubble diffusers is fastened to the manifold over respective lateral openings through a lateral wall of the elongated tube, wherein the lateral openings are, e.g. equidistantly, longitudinally aligned along the manifold. Additionally or alternatively, in some embodiments, the manifold is held in the horizontal plane by being fastened to the rigid frame, and wherein each of the bubble diffusers is held, e.g. stretched, in the horizontal plane by being, by its first end, fastened to the manifold and, by its second end, fastened to the rigid frame.

In some embodiments, the container has the shape of a cuboid, typically rectangular cuboid, where each of its four vertical sides is formed by a sheet, e.g. a flexible sheet, of a watertight material. Additionally or alternatively, in some embodiments, a bottom of the container is formed by a sheet, e.g. a flexible sheet, of a watertight material arranged on a bottom frame. In some embodiments, the bottom frame is provided with weights, preferably detachable weights, stabilizing the container as it is suspended in the body of water.

In some embodiments, the surface fluid removing arrangement comprises a funnel, e.g. wherein the wide end of the funnel faces downward and contacts the water held in the container, whereby the water surface is enclosed and reduced in the narrow end of the funnel.

In some embodiments, the system further comprises the PFAS removing arrangement, said PFAS removing arrangement may comprise living plants, e.g. sedges, for removing PFAS from the removed surface fluid. In some embodiments, the living plants are arranged on at least one raft floating on the body of water.

In some embodiments, the top water surface is covered, e.g. by a housing of the surface fluid removing arrangement and/or by a housing of the floating device, for preventing PFAS in the surface fluid at the water surface from escaping into the atmosphere. In some embodiments, the housing has a gas outlet provided with a PFAS filter, e.g. comprising activated carbon, for removing PFAS from gas exiting the housing.

In some embodiments, the outlet piping is for guiding the water (retentate) from the container to an inlet of an irrigation system or of a water treatment plant, e.g. for drinking water.

In some embodiments, the floating device is anchored in the body of water, e.g. to a bottom of the body of water.

In some embodiments, the gas comprises at least 20 vol% oxygen, e.g. wherein the gas is air or oxygen or a mixture thereof.

According to another aspect of the present invention, there is provided a method of removing PFAS from water, e.g. performed by an embodiment of the system of the present disclosure. The method comprises pumping water (feed) from the body of water into the container via the water inlet and inlet piping, whereby the container is filled with the water and the top water surface is formed. The method also comprises releasing, from the bubble releasing arrangement, the bubbles of the gas in the water which is filling the container. The method also comprises pumping water from below the bubble releasing arrangement out of the container via the water outlet and outlet piping, whereby a downward flow of the water in the container is formed between the water inlet and the water outlet, which water flow is counter current to the released bubbles as they rise to the water surface. The method also comprises, by the surface fluid removing arrangement, continuously removing the surface fluid and guiding it toward the PFAS removing arrangement.

In some embodiments, the pumping of the water into the container comprises controlling the pumping to regulate the downward flow, and thus the retention time, of the water in the container, e.g. based on an indication of a PFAS content in the water in the container.

PFAS, as well as other organic compounds such as proteins and fats, which may be dissolved or suspended in the water, can follow the bubbles to the surface e.g. to form a foam or fluid layer at the surface. This is because such compounds may comprise a hydrophobic end which is attracted to the bubble in view of the relatively polar environment of the water. At the surface, the organic compounds, including PFAS, brought to said surface by the bubbles may be removed by removing the fluid at the surface, herein called the surface fluid, by a surface fluid removing arrangement, typically including a skimmer.

By having the water inlet in the upper part of the container, and the water outlet in the lower part of the container, a downward flow of the water is achieved within the container, counter current to the released bubbles as they rise to the water surface. As the water meets the bubbles in this way, any PFAS in the water may be attracted/adsorbed to the gas-water interface of the bubbles and follow the bubbles to the water surface, creating surface fluid at the water surface, possibly including foam formed by the organic compounds, which is relatively rich in PFAS. This surface fluid is then removed, resulting in a lower concentration of PFAS in the water leaving the container via the water outlet than in the water entering the container via the water inlet.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic sectional side view of a system for removing PFAS from water, in accordance with some embodiments of the present invention.
Fig 2 is a schematic sectional side view of a surface fluid removing arrangement, in accordance with some embodiments of the present invention.
Fig 3 is a schematic top view of a system for removing PFAS from water, in accordance with some embodiments of the present invention.
Fig 4 is a schematic plan view of a bubble releasing arrangement, in accordance with some embodiments of the present invention.
Fig 5 is a schematic flow chart of a method of removing PFAS from water, in accordance with some embodiments of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

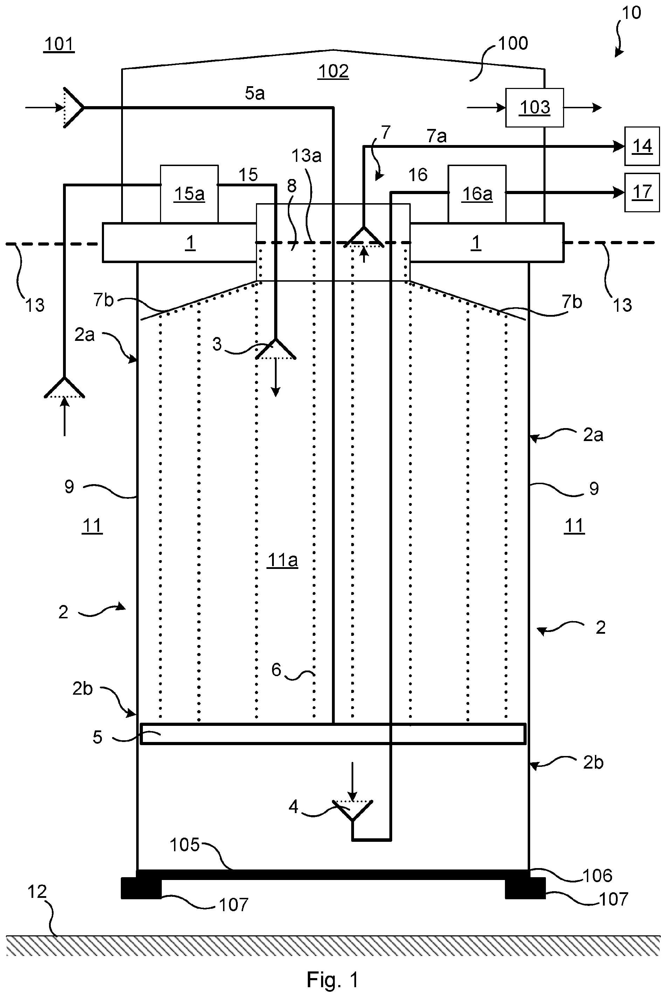

Figure 1 illustrates a PFAS removing system 10. The system 10 comprises a floating device 1, e.g. a raft, pram, boat or the like, floating on a body of water 11, e.g. a lake or the like. The floating device 1 may be provided with a housing 100, e.g. for protecting parts of the system 10 arranged on the floating device 1 and/or for preventing PFAS which has transitioned from the water 11a below the floating device to the air 102 above the floating device to enter the ambient air 101. In some embodiments, the housing 100 has a gas outlet 103 provided with a PFAS filter, e.g. comprising activated carbon, for removing PFAS from gas (air) 102 exiting the housing and entering the ambient air 101.

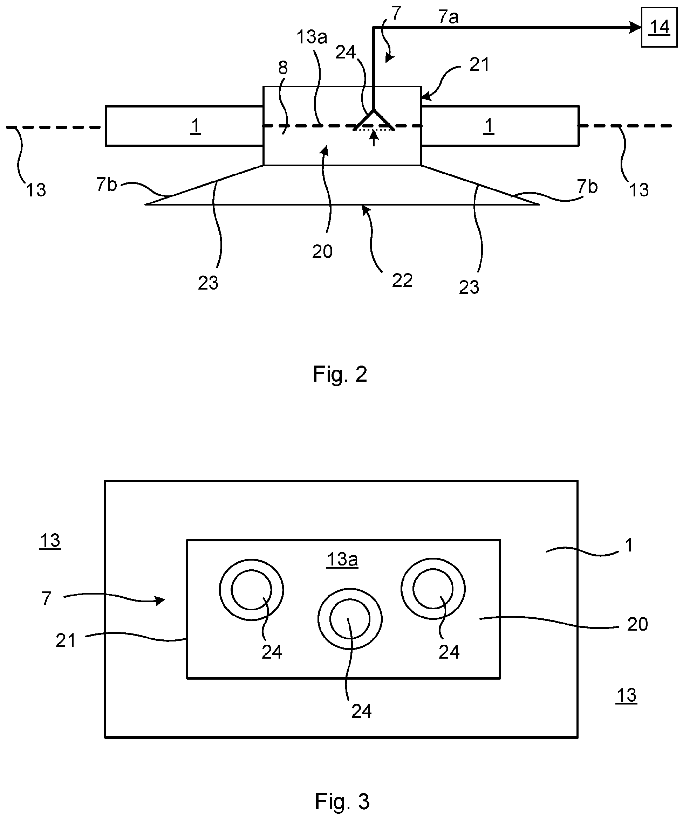

The system 10 comprises a container 2. The container 2 is arranged extending beneath the floating device and is fastened to the floating device such that the container is suspended from the floating device 1 in the body of water 11 above the bottom 12 of the body of water. The container has vertical side(s) 9 and a bottom 105. The container 2 is typically watertight, at least to such a degree that the downward water flow between the water inlet 3 and the water outlet 4 is achievable in the container. The top of the container 2 may be defined at least partly by the underside of the floating device 1 and/or by the surface fluid removing arrangement 7. At least partly, the top of the container 2 is open, e.g. in an opening 20 (see figure 2), in the form of a vertical through hole, in the floating device 1. A top water surface 13a is formed as a water-gas interface in the container 2. Since the water surface 13a is typically at the same level as the surface 13 of the body of water outside of the container, avoiding a pressure difference between the inside and outside of the container 2, the water surface 13a may be formed in the opening 20 in the floating device 1.

The vertical side(s) 9 may be formed by sheets of any suitable watertight material, but it may be convenient with a flexible material, allowing the sides to be collapsed/folded e.g. during land transport of the system 10 for example on a truck. Alternatively, the vertical side(s) may be of a rigid material, e.g. sheets of glass fibre, metal or plywood. As an example, the vertical side(s) 9 may be formed by one or more tarpaulins. In some embodiments, the container 2 may have a right circular cylindrical shape, thus having only one vertical side 9. In some other embodiments, the container 2 may have a cuboid shape, typically a (right) rectangular cuboid shape, or a rectangular prism, thus having four rectangular vertical sides 9. In some embodiments, the container 2 (e.g. cuboid) has a height, between the water surface 13a (or the floating device 1) and the bottom 105, within the range of 3-10 m, e.g. withing the range of 5-6 m.

The bottom 105 of the container 2 may similarly be formed by sheets of any suitable watertight material, but it may be convenient with a flexible material, e.g. the same material as for the vertical sides 9. Alternatively, the bottom 105 may be of a rigid material, e.g. sheets of glass fibre, metal or plywood. In some embodiments, the bottom 105, e.g. forming a rectangular horizontal bottom of a cuboid container 2, may have a length within the range of 3-10 m, e.g. withing the range of 5-6 m. Additionally or alternatively, in some embodiments, the bottom 105, e.g. forming a rectangular horizontal bottom of a cuboid container 2, may have a width within the range of 1-5 m, e.g. within the range of 2-3 m. The length and width of the bottom 105 may be adapted to allow the container 2, or the whole system 10, to be transported by truck. For instance, the bottom sheet, e.g. a flexible sheet such as a tarpaulin, may be arranged (e.g. stretched) on a rigid bottom frame 106, e.g. of aluminium. To stabilize the container, especially if the vertical sides 9 are formed of a flexible material, it may be convenient that the bottom 105, e.g. a bottom frame 106 thereof, is weighty to extend the container 2 fully downward and help stabilize the container in relation to any movement of the water outside of the container which the container is suspended in. to increase the weight of the bottom 105, weights 107 may be attached to the bottom 105, e.g. to a frame 106 thereof. Such weights 107 may conveniently be detachable, allowing suitable weights 107 to be selected depending on the situation, e.g. water flow outside of the container 2.

A water inlet 3 is arranged in the upper part 2a of the container 2. As used herein the upper part 2a of the container is above the middle of the container, and the lower part 2b of the container is below said middle of the container. The water inlet 3 is connected via inlet piping 15 to the body of water 11 outside of the container. Thus, water, also called feed, from the body of water 11 outside of the container 2 is guided via the inlet piping 15, e.g. by means of an inlet pump 15a typically on the floating device 1, into the container and expelled from the water inlet 3. Similarly, a water outlet 4 is arranged in the lower part 2b of the container 2. The water outlet is connected to the outside of the container 2 via outlet piping 16 for guiding water 11a, optionally called retentate, from inside of the container via the outlet piping 16, e.g. by means of an outlet pump 16a typically on the floating device 1, to the outside of the container, e.g. to a an inlet 17 for example of an irrigation system or a water treatment plant e.g. for drinking water. Between the water inlet 3, expelling water 11a into the upper part 2a of the container 2, and the water outlet 4, sucking water 11a from the lower part 2b of the container 2, a downward flow of water 11a inside the container is formed. In some embodiments, the downward flow, and thus the retention time of the water 11a in the container 2 is regulated, e.g. by inlet pump 15a and/or outlet pump 16a. In some embodiments, the retention time is regulated to be at least 0.1 h, e.g. to be within the range of 0.2-5 h, e.g. of 0.5-1.5 h. Additionally or alternatively, in some embodiments, the downward flow of water 11a is regulated to be within the range of 1-2 m³ per minute. The downward flow, and thus the retention time of the water 11a in the container 2 may be regulated based on an indication or determination of a PFAS content in the water 11a in the container. The indication or determination of the PFAS content in the water 11a may be obtained by testing, e.g. in a lab, a water sample from the body of water 11. In some embodiments, the indication or determination of the PFAS content in the water 11a may be obtained by testing, e.g. in a lab, a water sample at the inlet 3 and/or at the outlet 4 of the container 2.

To keep the water pressure within the container 2 similar to the water pressure outside of the container, at the same depth, and/or to keep the water surface 13a in the container 2 level with the surface 13 of the body of water 11, the water level, e.g. the hight of the water surface 13a, in the container 2 may be measured, for example by a water level sensor installed in the container 2. In some embodiments, the inlet pump 15a and/or the outlet pump 16a is controlled based on sensor signals from such a water level sensor.

In the lower part 2b of the container, but above the water outlet 4, the bubble releasing arrangement 5 is arranged. In some embodiments, the bubble releasing arrangement 5 is arranged in a horizontal plane above the bottom 105 of the container, e.g. at a distance from the bottom 105 within the range of 0.1-1 m, e.g. of 0.3-0.7 m. The bubble releasing arrangement 5 is arranged to release gas bubbles 6 (symbolically illustrated by dotted lines in figure 1) which rise towards the water surface 13a counter current to the downward flow of the water 11a in the container 2, forming a PFAS enriched foam or foamate at the water surface 13a. Since the PFAS molecules are attracted to the water-gas interface of the bubbles 6, causing adsorption of PFAS to the bubbles 6, the PFAS removal is increased with increased number of bubbles but also with reduced bubble size since the ratio between interface area and gas volume increases with smaller bubble size. On the other hand, the bubbles should be large enough to reach the water surface 13a (not being absorbed into the water 11a before reaching the surface 13a). In some embodiments, the gas comprises at least 20 vol% oxygen, e.g. wherein the gas is air or oxygen or a mixture thereof. A gas tube 5a of the bubble releasing arrangement 5 may be arranged to guide, e.g. by means of a compressor, the gas from a gas source, e.g. ambient air 101 or air 102 from within a housing 100 of the floating device 1. An advantage with using air 102 from within the housing 100 as the gas source may be to obtain a more closed system which releases less airborne PFAS into the ambient air 101. In some embodiments, the housing 100 only covers part of the floating device 1, e.g. as part of the surface fluid removing arrangement (7).

The system 10 also comprises a surface fluid removing arrangement 7 arranged for continuously removing surface fluid 8 (including any foam) at the water surface 13a of the container 2. The surface fluid 8 comprises water at the surface 13a, e.g. the top 1-10 cm of the water 11a at the surface 13a, as well as any foam formed on said water surface 13a. The foam, if any, is formed from organic compounds, including PFAS, brought to the water surface by the bubbles 6 released by the bubble releasing arrangement 5. However, most of the bubbles 6 may typically burst upon reaching the surface 13a, thus releasing the PFAS in the water of the surface fluid 8 without necessarily forming foam. The surface fluid removing arrangement 7 comprises a connection 7a (or conduit) to a PFAS removing arrangement 14 for guiding, e.g. by means of a pump, the removed surface fluid 8 via said connection 7a towards the PFAS removing arrangement 14. In some embodiments, the surface fluid removing arrangement 7 comprises a funnel 7b for reducing the area of the top water surface 13a. The surface fluid removing arrangement 7 is further discussed with reference to figures 2 and 3.

Figure 2 illustrates in more detail some embodiments of the surface fluid removing arrangement 7, e.g. the surface fluid removing arrangement 7 of figure 1. The surface fluid removing arrangement 7 may comprise at least one skimmer 24, e.g. floating surface skimmer, for removing the surface fluid 8 and conduct said surface fluid 8 via the connection 7a to the PFAS removing arrangement 14.

The PFAS removing arrangement 14 may remove PFAS from the removed surface fluid 8 in any conventional way, including activated carbon filters and the like, but in the context of the present disclosure it may be convenient to use a PFAS removing arrangement 14 comprising living plants, e.g. sedges, for removing PFAS from the removed surface fluid 8. Such a PFAS removing arrangement 14 comprising living plants may be regarded as a phytofilter. Conveniently, the living plants may be arranged on at least one raft, or the like, typically a series of rafts, floating on the same body of water 11 as the floating device 1 of the system 10, e.g. adjacent to the floating device 1. Eventually, after the living plants have taken up enough PFAS from the removed surface fluid 8, the plants may be burned at a temperature high enough to break up the PFAS molecules.

The surface fluid removing arrangement 7 may comprise a funnel 7b, e.g. of aluminium, wherein the wide end 22 of the funnel faces downward and contacts the water 11a held in the container 2 such that the water surface 13a in the opening 20 of the floating device 1 is enclosed and reduced in the narrow end 21 of the funnel. A function of the funnel 7b is thus to reduce the surface area of the water surface 13a to facilitate the removal of the surface fluid 8 there from. To facilitate the rise of the bubbles 6 to the water surface 13a, the funnel 7b conveniently has an inclined section between its wide end 22 and narrow end 21 in a vertical gap between the wide end 22 and narrow end 21, but it is also conceivable that the funnel 7b may in some embodiments have a horizontal section between its wide end 22 and narrow end 21, e.g. if there is no vertical gap between the wide end 22 and narrow end 21.

Figure 3 illustrates the floating device 1 as viewed from the top. A plurality (here three) of floating surface skimmers 24 float on the water surface 13a in the vertical opening 20 in the floating device 1 to remove the surface fluid 8 at the water surface 13a.

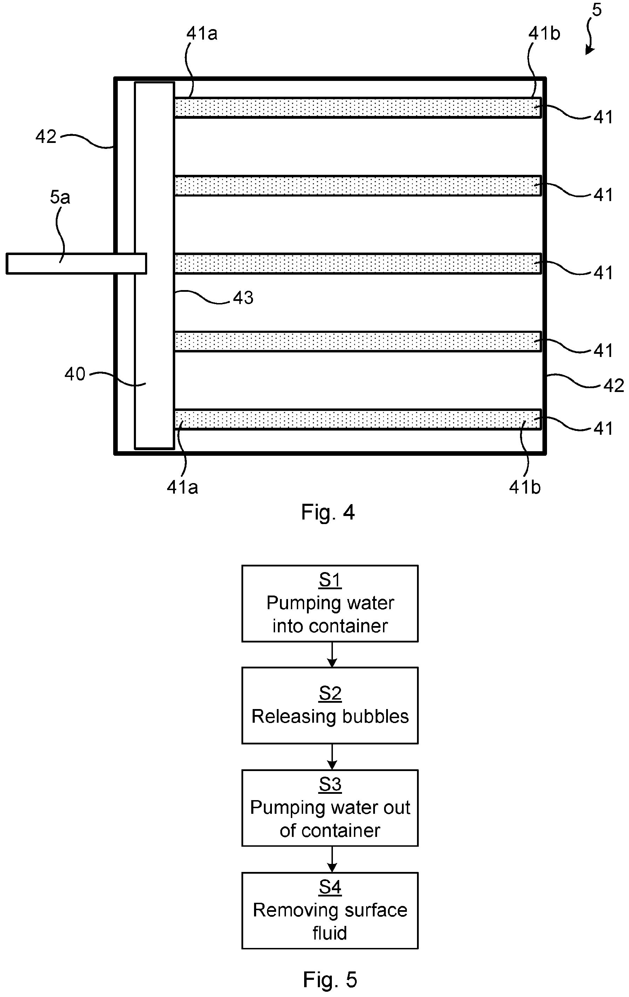

Figure 4 illustrates a bubble releasing arrangement 5. The bubble releasing arrangement 5 is preferably not attached to the sides 9 of the container 2, instead hanging in place from wires or the like fastening the bubble releasing arrangement 5 to the floating device 1. This allows the bubble releasing arrangement 5 to be adjusted in the vertical direction and possibly also to be removed from the container 2 e.g. for service. In some embodiments, the bubble releasing arrangement 5 comprises a manifold 40, a gas tube 5a, typically a flexible gas tube 5a, connected to the manifold 40 for supplying pressurized gas, e.g. ambient air 101 to the manifold, and a plurality of bubble diffusers 41 (here five diffusers 41), typically tube formed, each connected over a respective diffuser opening in the manifold. By means of the manifold 40, the gas 101, at an overpressure, is distributed, preferably evenly, to each of the diffusers 41 connected to the manifold.

The manifold 40 is typically of a rigid material e.g. a metal such as steel. The manifold is preferably in the form of a, typically straight, elongated tube having two ends. The elongated tube of the manifold 40 may have a length within the range of 1-5 m, which may be convenient to allow it to fit on a truck with the rest of the system 10. The manifold 40 is provided with a tube opening over which the gas tube 5a can be attached for providing pressurized gas 101 to the manifold. The tube opening may be through a lateral wall of the manifold, preferably in the middle between its two ends. The manifold 40 is provided with a plurality of diffuser openings, one per diffuser 41 to be attached to the manifold, each diffuser opening may be provided with a nozzle for attaching a respective diffuser 41 to each diffuser opening. Typically, the diffuser openings are provided through a lateral wall of the diffuser, typically at a radial angle within the range of 90-180°, e.g. at an angle of 90°, to the tube opening. In some embodiments, the lateral diffuser openings are, e.g. equidistantly, longitudinally aligned along the manifold 40, implying that the diffuser openings are arranged in a row following a straight line parallel to a longitudinal axis of the manifold 40, wherein the manifold is formed as a rigid straight tube, e.g. having a right circular cylindrical shell forming the lateral wall of the manifold. The manifold 40, e.g. at its ends, may be fastened to a rigid frame 42, e.g. of aluminium, for holding the manifold, together with the diffusers 41, in a horizontal plane within the container 2.

In some embodiments, each diffuser 41 has a first end 41a fastened to the manifold 40 and a second end 41b which may be fastened to the rigid frame 42. The gas 101 flows from the manifold 40 into each diffuser 41 at its first end 41a and is then released as bubbles 6 from the diffuser along the whole length of the diffuser, from the first end 41a to the second end 41b. Any number of diffusers 41 may be attached to the manifold 40, e.g. within the range of 3-100, or 3-10, diffusers 41.

Each diffuser 41 may at its first end 41a be provided with a fastener, e.g. comprising threads, for fastening the diffuser 41 to a nozzle of the manifold 40. The diffuser 40 may typically be in the form of a flexible tubing having perforations 31 for releasing bubbles 6, e.g. microbubbles, from inside the diffuser into the water 11a surrounding the diffuser, when the bubble releasing arrangement 5 is in use. Alternatively, the tube formed diffuser may be of a rigid material, e.g. a metallic or plastic material with perforations, e.g. laser cut perforations. For the bubbles 6 to be released from the diffuser 41, there has to be an overpressure of the gas 101 within the diffuser compared with the ambient water pressure. The overpressure inside the diffuser 41 may be up to 2 bar, e.g. within the range of 0.5-2 bar. To prevent intake of water into the diffusers in case the overpressure is too low, e.g. if a gas flow sensor in the bubble releasing arrangement 5 indicates that the gas flow has stopped, the bubble releasing arrangement may be raised in or from the container 2 e.g. by wires from which the bubble releasing arrangement hangs in place within the container 2.

In some embodiments, each tube formed diffuser 41 may have a length within the range of 3-10 m, e.g. within the range of 5-6 m, which may be convenient to allow it to fit on a truck with the rest of the system 10. Additionally or alternatively, in some embodiments, the diffuser 41 has an outer diameter of the tubing within the range of 15-25 mm, preferably within the range of 18-20 mm, and/or an inner diameter of the tubing within the range of 10-20 mm, preferably within the range of 12-15 mm. Additionally or alternatively, in some embodiments, the diffuser 41 has a number of perforations within the range of 1 000-120 000 perforations per meter of tubing. For example, the diffuser 41 may be or comprise the microbubble diffuser OXYPRAX^{™} from Bubbletech or SOLVOX^{™} diffusion hoses from Linde.

To hold each diffuser 41 in the same horizontal plane as the manifold, the second end 41b of the diffuser may be fastened to the rigid frame 42. If the diffuser 41 is of a flexible material, the diffuser 41 may then be stretched between the manifold 40 and the rigid frame 42.

In some alternative embodiments, the bubble releasing arrangement 5 may comprise another arrangement for achieving the bubbles 6, e.g. ejector(s), ceramic plates with perforations (optionally also forming the bottom 105) or pumice, connected to the gas tube 5a.

Figure 5 is a flow chart illustrating some embodiments of the method of the present disclosure. The method is for removing PFAS from water, and is typically performed by an embodiment of the system 10 of the present disclosure. The method comprises pumping S1 water from the body of water 11 into the container 2 via the water inlet 3 and inlet piping 15, whereby the container is filled with the water 11a and the top water surface 13a is formed. The method also comprises releasing S2 the bubbles 6 of the gas 101 in the water 11a filling the container 2, from the bubble releasing arrangement 5. The method also comprises pumping S3 water 11a from below the bubble releasing arrangement 5 out of the container 2 via the water outlet 4 and outlet piping 16, whereby a downward flow of the water 11a in the container 2 is formed between the water inlet 3 and the water outlet 4, counter current to the released S2 bubbles 6 as they rise to the water surface 13a. The method also comprises, by the surface fluid removing arrangement 7, continuously removing S4 the surface fluid 8 and guiding it toward the PFAS removing arrangement 14. In some embodiments, the pumping S1 of the water into the container 2 comprises controlling the pumping S1 to regulate the downward flow of the water 11a in the container, e.g. based on an indication of a PFAS content in the water in the container.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. A system (10) for removing Per- and Polyfluoroalkyl Substances, PFAS, from water, the system comprising:
a floating device (1) floating on a body of water (11);
a container (2) arranged beneath, and fastened to, the floating device (1), suspended in the body of water (11) above a bottom (12) of the body of water, the container having a water inlet (3) arranged in an upper part (2a) of the container and a water outlet (4) arranged in a lower part (2b) of the container;
a bubble releasing arrangement (5) arranged in the lower part (2b) of the container (2), above the water outlet (4), and arranged for releasing bubbles (6) of a gas below a top water surface (13a) in the container; and
a surface fluid removing arrangement (7) arranged for continuously removing surface fluid (8), including any foam, at the water surface (13a) in the container (2), wherein the surface fluid removing arrangement comprises a connection (7a) to a PFAS removing arrangement (14) for guiding the removed surface fluid via said connection towards the PFAS removing arrangement.

2. The system of claim 1, wherein the bubble releasing arrangement (5) comprises:
a plurality of bubble diffusers (41), each diffuser being formed by a tubing, e.g. a flexible tubing, having perforations for releasing bubbles (6) therefrom;
a manifold (40) connected to each of the diffusers (41) and arranged for distributing the gas thereto;
a gas tube (5a) connecting the manifold (40) to a gas source (101/102) for providing the gas to the manifold; and
a rigid frame (42) to which all of the diffusers (41) are fastened and held parallel to each other in a horizontal plane within the container (2).

3. The system of claim 2, wherein the manifold (40) is a rigid elongated tube;
wherein each of the bubble diffusers (41) is fastened to the manifold (40) over respective lateral openings through a lateral wall (43) of the elongated tube, wherein the lateral openings are, e.g. equidistantly, longitudinally aligned along the manifold.

4. The system of claim 2 or 3, wherein the manifold (40) is held in the horizontal plane by being fastened to the rigid frame (42), and wherein each of the bubble diffusers (41) is held, e.g. stretched, in the horizontal plane by being, by its first end (41a), fastened to the manifold (40) and, by its second end (41b), fastened to the rigid frame (42).

5. The system of any preceding claim, wherein the container (2) has the shape of a cuboid, typically rectangular cuboid, where each of its four vertical sides (9) is formed by a sheet, e.g. a flexible sheet, of a watertight material.

6. The system of any preceding claim, wherein a bottom (105) of the container (2) is formed by a sheet, e.g. a flexible sheet, of a watertight material arranged on a bottom frame (106).

7. The system of claim 6, wherein the bottom frame (106) is provided with weights (107), preferably detachable weights, stabilizing the container (2) as it is suspended in the body of water (11).

8. The system of any preceding claim, wherein the surface fluid removing arrangement (7) comprises a funnel (7b), wherein the wide end (22) of the funnel faces downward and contacts the water (11a) held in the container (2), whereby the water surface (13a) is enclosed and reduced in the narrow end (21) of the funnel.

9. The system of any preceding claim, further comprising the PFAS removing arrangement (14), said PFAS removing arrangement comprising living plants, e.g. sedges, for removing PFAS from the removed surface fluid (8).

10. The system of claim 9, wherein the living plants are arranged on at least one raft floating on the body of water (11).

11. The system of any preceding claim, wherein the top water surface (13a) is covered, e.g. by a housing of the surface fluid removing arrangement (7) and/or by a housing (100) of the floating device (1), for preventing PFAS in the surface fluid (8) at the water surface (13a) from escaping into the atmosphere (101).

12. The system of claim 11, wherein the housing (100) has a gas outlet (103) provided with a PFAS filter, e.g. comprising activated carbon, for removing PFAS from gas (102) exiting the housing.

13. The system of any preceding claim, wherein outlet piping (16) connected to the water outlet (4) is arranged for guiding water (11a) from the container to an inlet (17) of an irrigation system or of a water treatment plant, e.g. for drinking water.

14. A method of removing PFAS from water, performed by the system (10) of any preceding claim, the method comprising:
pumping (S1) water from the body of water (11) into the container (2) via the water inlet (3), whereby the container is filled with the water (11a) and the top water surface (13a) is formed;
releasing (S2) the bubbles (6) of the gas (101) in the water (11a) filling the container (2), from the bubble releasing arrangement (5);
pumping (S3) water (11a) from below the bubble releasing arrangement (5) out of the container (2) via the water outlet (4), whereby a downward flow of the water (11a) in the container (2) is formed between the water inlet (3) and the water outlet (4), counter current to the released (S2) bubbles (6) as they rise to the water surface (13a); and
by the surface fluid removing arrangement (7), continuously removing (S4) the surface fluid (8) and guiding it toward the PFAS removing arrangement (14).

15. The method of claim 14, wherein the pumping (S1) of the water into the container (2) comprises controlling the pumping (S1) to regulate the downward flow of the water (11a) in the container, e.g. based on an indication of a PFAS content in the water in the container.
